# EUROPEAN PATENT SPECIFICATION

(11) **EP 4 068 248 B1**
(45) Date of publication and mention of the grant of the patent: **21.01.2026**
(21) Application number: 22165501.2
(22) Date of filing: 30.03.2022
(51) Int. Cl.: G09B 9/28, B64F 5/60

(54) **CALIBRATION ADAPTOR BRACKET, APPARATUS AND METHOD**
KALIBRIERUNGSADAPTERHALTER, VORRICHTUNG UND VERFAHREN
SUPPORT D'ADAPTATEUR D'ÉTALONNAGE, APPAREIL ET PROCÉDÉ

(30) Priority: 30.03.2021 US 202117217063; 30.03.2021 CA 3113686
(43) Date of publication of application: 05.10.2022
(73) Proprietor: CAE Inc., Saint-Laurent, Québec H4T 1G6 (CA)
(72) Inventor: YELLE, Jean-Claude, Saint-Laurent, Quebec H4T 1G6 (CA); BRISSON, Samuel, Saint-Laurent, Quebec H4T 1G6 (CA); PLANTÉ, Zachary, Saint-Laurent, Quebec H4T 1G6 (CA)
(74) Representative: Hepp Wenger Ryffel AG

(56) References cited:
- CN-B- 106 205 275
- US-A- 4 947 697
- US-A- 5 209 661
- US-A1- 2015 330 847
- PRIMOZ KOVACIC: "Active Control Loading System for a Research Flight Simulator", 28 February 2018 (2018-02-28), pages 1 - 92, XP055951246, Retrieved from the Internet <URL:https://diglib.tugraz.at/download.php?id=5bebd99aaed40&location=browse> [retrieved on 20220812]
- ANONYMOUS C: "CONTROL LOADING SOLUTIONS", 31 October 2016 (2016-10-31), pages 1 - 5, XP055951248, Retrieved from the Internet <URL:https://www.moog.com/content/dam/moog/literature/ICD/Moog_ControlLoadingSolution_V4_10%2027%2016%20(002).pdf> [retrieved on 20220812]

## Description

### FIELD OF THE INVENTION

**The** present invention relates to a calibration adaptor bracket, apparatus and method. In particular, the present application relates to adaptors for connecting a force gauge to a control interface such as a yoke, stick, sidestick, rudder pedal or stab trim, in particular for use in a flight simulator or aircraft, and an apparatus and method for calibrating a simulated control interface such as a yoke, stick, sidestick, rudder pedal or stab trim in a flight simulator or aircraft.

### BACKGROUND TO THE INVENTION

Vehicle simulators such as those for simulating the operation of an aircraft have been developed to provide a realistic analogue of the vehicle being simulated without the dangers inherent in having such a vehicle operated by a novice or under extreme conditions. As the realism of the simulators has improved, they have become an indispensable component in the certification of vehicle operators such as pilots. In order to ensure that a given simulator meets the requisite realism such that they can be used as part of a certification program, the operation of various components must be measured versus a preapproved certification standard and, as necessary, the components must be recalibrated. In particular, systems such as sidesticks and stab trims, which provide an instantaneous force feedback to the operator where the amount of force is an indication of the current state of a component of the vehicle being operated (such as the flaps, ailerons and elevators on an aircraft) are required to provide a simulated force feedback that reproduces the levels of force feedback as would be experienced by the operator during actual operation.

Methods for measuring the force feedback of a sidestick and stab trim during operation of the simulator are known in the art. One drawback of these methods is that the measurements are not readily reproducible from time to time and simulator to simulator. The master thesis "Active Control Loading System for a Research Flight Simulator" by Primoz Kovacic (https://diglib.tugraz.at/download.php?id=5bebd99aaed40&location=browse) discloses an active Control Loading System for a research flight simulator in order to improve the current simulation fidelity. The publication "Control Loading Solutions" (https://www.moog.com/content/dam/moog/literature/ICD/Moog ControlLoadingSo lution V4 10%2027%2016%20(002).pdf) shows a Control Force Measurement System which facilitates force-position measurements of aircraft flight controls for the development of type-specific software models and verification/validation of the flight control responses in simulators.

### SUMMARY OF THE INVENTION

In order to address the above and other drawbacks, there is provided an adaptor for positioning a force gauge relative to a control interface in a flight simulator or aircraft, the force gauge comprising a gauge handle and a gauge connector, the control interface being moveable in at least one of a back-and-forth direction and a side-to-side direction. The adaptor comprises a housing positionable adjacent the control interface. The housing comprises a first surface configured to snugly receive a predetermined surface of the control interface, and a second surface comprising a first housing connector configured for connection to the gauge connector such that pressure is exertable on the control interface by the force gauge in a first direction of measurement aligned with one of the back-and-forth direction and the side-to-side direction.

In some embodiments of the adaptor the control interface comprises a sidestick and the housing is securable about a shaft of the sidestick.

In some embodiments of the adaptor a second direction of measurement is at right angles to the first direction of measurement, and the first point of attachment being configured such that the first direction of measurement is aligned with the back-and-forth direction and the second direction of measurement is aligned with the side-to-side direction.

In some embodiments of the adaptor the gauge connector comprises an elongate plunger, the first direction of measurement is aligned with a plunger axis, the outer surface comprises a second point of attachment, the first point of attachment is configured to receive an end of the plunger such that the plunger axis is aligned with the back-and-forth direction and the second point of attachment is configured to receive the end of the plunger such that the plunger axis is aligned with the side-to-side direction.

In some embodiments of the adaptor the first point of attachment is at right angles to the second point of attachment.

In some embodiments of the adaptor the first point of attachment and the second point of attachment lie in a common plane.

**In** some embodiments of the adaptor the common plane is substantially normal to the sidestick.

**In** some embodiments of the adaptor the plunger comprises a male threaded end and the first point of attachment and the second point of attachment each comprise a female threaded receptacle for receiving the male threaded end.

In some embodiments of the adaptor the housing is comprised of two parts arrangeable on opposite sides of the sidestick and interconnectable by a plurality of fasteners.

In some embodiments of the adaptor each of the fasteners comprises a bolt insertable through a respective bolt receiving bore in a first of the parts and a complementary threaded insert in a second of the parts and when the first part is arranged adjacent the second part, the bore aligns with the insert such that the bolt is threadable into the insert via the bore.

In some embodiments the adaptor further comprises an accelerometer for measuring a current angle of the sidestick.

There is also a provided a kit for measuring a force feedback of a control interface in a flight simulator or aircraft, the control interface moveable in a back-and-forth direction to change one of a pitch and a yaw of the simulator and in a side-to-side direction to change a roll of the simulator. The kit comprises a force gauge comprising a gauge handle, a gauge attachment portion and a first direction of measurement, and a housing positionable adjacent the control interface, the housing comprising a first inner surface configured to snugly receive a predetermined surface of the control interface and a second surface comprising a first point of attachment configured for attachment to the gauge attachment portion such that the first direction of measurement is aligned with one of the back-and-forth direction and the side-to-side direction.

In some embodiments of the kit the handle portion is elongate and at right angles to the first direction of measurement.

In some embodiments of the kit the gauge comprises a second direction of measurement at right angles to the first direction of measurement, and the first point of attachment is configured for attachment to the gauge attachment portion such that the first direction of measurement is aligned with the back-and-forth direction and the second direction of measurement is aligned with the side-to-side direction.

In some embodiments of the kit the handle portion is elongate and at right angles to the first direction of measurement and the second direction of measurement.

In some embodiments of the kit the second direction of measurement is along a gauge axis and the first direction of measurement is about the gauge axis.

In some embodiments of the kit the control interface comprises a sidestick, the housing is securable about a shaft of the sidestick and the gauge attachment portion comprises an elongate plunger, the first direction of measurement is aligned with a plunger axis, the outer surface comprises a second point of attachment, and the first point of attachment is configured to receive an end of the plunger such that the plunger axis is aligned with the back-and-forth direction and the second point of attachment is configured for receiving the plunger such that the plunger axis is aligned with the side-to-side direction.

In some embodiments of the kit the first point of attachment is at right angles to the second point of attachment.

In some embodiments of the kit the first point of attachment and the second point of attachment lie in a common plane.

In some embodiments of the kit the common plane is substantially normal to the sidestick.

In some embodiments of the kit the plunger comprises a male threaded end and wherein the first point of attachment and the second point of attachment each comprise a female threaded receptacle for receiving the male threaded end.

In some embodiments of the kit the control interface comprises a sidestick and the housing is comprised of two parts arrangeable on opposite sides of the sidestick and interconnectable by a plurality of fasteners.

**In** some embodiments of the kit each of the fasteners comprises a bolt insertable through a respective bolt receiving bore in a first of the parts and a complementary threaded insert in a second of the parts, and when the first part is arranged adjacent the second part, the bore aligns with the insert such that the bolt is threadable into the insert via the bore.

**In** some embodiments the kit further comprises an accelerometer for measuring a current angle of the sidestick.

Additionally there is provided a method for testing a force feedback of a control interface in a flight simulator or aircraft, the control interface being moveable in at least one of a back-and-forth direction to change a pitch or a yaw of the simulator and in a side-to-side direction to change a roll of the simulator. The method comprises placing an adaptor comprising a first point of attachment adjacent the control interface, connecting a force gauge to the first point of attachment such that a first direction of measurement of the force gauge is aligned with one of the back-and-forth direction and the side-to-side direction, and moving a gauge handle portion of the force gauge in the first direction of measurement, thereby causing the force gauge to measure the force feedback generated by the control interface in the first measurement direction.

In some embodiments the method for testing a force feedback of a control interface further comprises measuring a current angle of the control interface.

In some embodiments of the method for testing a force feedback of a control interface the measuring a current angle is performed using an accelerometer.

In some embodiments the method for testing a force feedback of a control interface further comprises securing the accelerometer to the control interface.

In some embodiments of the method for testing a force feedback of a control interface the accelerometer is embedded in the adaptor.

In some embodiments of the method for testing a force feedback of a control interface measuring a current angle of the control interface comprises operating the simulator, thereby causing the simulator to output the current angle.

In some embodiments of the method for testing a force feedback of a control interface the control interface comprises a sidestick, the force gauge comprises a second direction of measurement at right angles to the first direction of measurement, and the connecting comprises connecting the force gauge to the first point of attachment such that the first direction of measurement is aligned with the back-and-forth direction and the second measurement direction is aligned with the side-to-side direction.

In some embodiments of the method for testing a force feedback of a control interface the first direction is about the second direction and measuring the force by the sidestick in the first direction comprises measuring a torque between the elongate handle and the first point of attachment.

In some embodiments of the method for testing a force feedback of a control interface the control interface comprises a sidestick and the adaptor comprises a second point of attachment, the force gauge comprises an elongate plunger, and the attaching comprises one of securing an end of the plunger to the first point of attachment such that a plunger axis aligns with the first direction of measurement and securing the end of the plunger to the second point of attachment such that the plunger axis aligns with a second direction of measurement at right angles to the first direction of measurement.

In some embodiments of the method for testing a force feedback of a control interface the first direction of measurement is aligned with the back-and-forth direction and the second direction of measurement is aligned with the side-to-side direction.

In some embodiments of the method for testing a force feedback of a control interface the plunger comprises a male threaded end and the first point of attachment comprises a first female threaded receptacle for receiving the male threaded end and the second point of attachment comprises a second female threaded receptacle for receiving the male threaded end, and attaching the plunger to the first point comprises threading the male threaded end into the first female threaded receptacle and attaching the plunger to the second point comprises threading the male threaded end into the second female threaded receptacle.

Also, there is provided an assembly for measuring a force feedback of a stab trim in a flight simulator or aircraft, the stab trim comprising a trim wheel comprising a shaft receiving aperture arranged along an axis of the trim wheel. The assembly comprises an elongate shaft configured for insertion into the aperture and comprising a shaft axis, a handle arranged substantially radially to the shaft axis, and a load cell interconnecting the shaft and the handle where the load cell is configured for measuring a torque between the handle and the shaft.

In some embodiments the assembly further comprises a bracket for securing the shaft to the load cell.

In some embodiments of the assembly the bracket is disk shaped and comprises a second shaft receiving aperture at a center thereof for receiving the shaft, and the aperture is shaped to receive the shaft in a friction fit for rotation therewith.

In some embodiments of the assembly the shaft receiving aperture is of square cross-section, the shaft is manufactured from a square rod and the second shaft receiving aperture is of square cross-section.

Furthermore, there is provided a method of testing a stab trim in a cockpit simulator or aircraft, the stab trim comprising a trim wheel comprising a shaft receiving aperture arranged along an axis thereof, comprising interconnecting a shaft to a handle wherein the shaft comprises a shaft axis and the handle is arranged substantially radially to the shaft axis, inserting the shaft into the aperture, operating the simulator, and measuring a torque between the handle and the shaft.

In some embodiments of the method of testing the stab trim the measuring the torque between the handle and the shaft is performed using a load cell interconnecting the shaft and the handle.

### BRIEF DESCRIPTION OF THE DRAWINGS

Figure 1A provides a rear right raised perspective view of an adaptor bracket in accordance with a first illustrative embodiment of the present invention;
Figure 1B provides a front plan view of an adaptor bracket in accordance with a first illustrative embodiment of the present invention;
Figure 1C provides a rear plan view of an adaptor bracket in accordance with a first illustrative embodiment of the present invention;
Figure 1D provides a top plan view of an adaptor bracket in accordance with a first illustrative embodiment of the present invention;
Figure 1E provides a bottom plan view of an adaptor bracket in accordance with a first illustrative embodiment of the present invention;
Figure 1F provides a right plan view of an adaptor bracket in accordance with a first illustrative embodiment of the present invention;
Figure 1G provides a left plan view of an adaptor bracket in accordance with a first illustrative embodiment of the present invention;
Figure 2 provides an exploded perspective view of an adaptor bracket and sidestick assembly in accordance with a first illustrative embodiment of the present invention;
Figure 3A provides a rear right raised perspective view of an adaptor bracket, sidestick and force gauge assembly for measuring force feedback in a side-to-side direction in accordance with a first illustrative embodiment of the present invention;
Figure 3B provides a rear right raised perspective view of an adaptor bracket, sidestick and force gauge assembly for measuring force feedback in a back to front direction in accordance with a first illustrative embodiment of the present invention;
Figure 4 provides a partially exploded perspective view of an adaptor bracket and sidestick assembly in accordance with a second illustrative embodiment of the present invention;
Figure 5 provides a graph of results of a force measurement of a sidestick in accordance with an illustrative embodiment of the present invention;
Figure 6 provides a raised perspective view of an assembly for measuring torque in a stab trim in accordance with an illustrative embodiment of the present invention;
Figure 7 provides a raised perspective view of a stab trim with a shaft and adaptor bracket installed in accordance with an illustrative embodiment of the present invention;
Figure 8A provides a raised right front perspective view of an adaptor bracket in accordance with an illustrative embodiment of the present invention;
Figure 8B provides a front plan view of an adaptor bracket in accordance with an illustrative embodiment of the present invention.
Figure 8C provides a side plan view of an adaptor bracket in accordance with an illustrative embodiment of the present invention.
Figure 8D provides a rear plan view of an adaptor bracket in accordance with an illustrative embodiment of the present invention.
Figure 8E provides a raised left rear perspective view of an adaptor bracket in accordance with an illustrative embodiment of the present invention.
Figure 9A provides a raised left front perspective view of an adaptor bracket in accordance with a third illustrative embodiment of the present invention;
Figure 9B provides a right rear front perspective view of an adaptor bracket in accordance with a third illustrative embodiment of the present invention; and
Figure 10 provides a rear raised perspective view of an adaptor bracket, rudder pedal and force gauge assembly for measuring force feedback of a rudder pedal in accordance with a third illustrative embodiment of the present invention.

### DETAILED DESCRIPTION OF THE ILLUSTRATIVE EMBODIMENTS

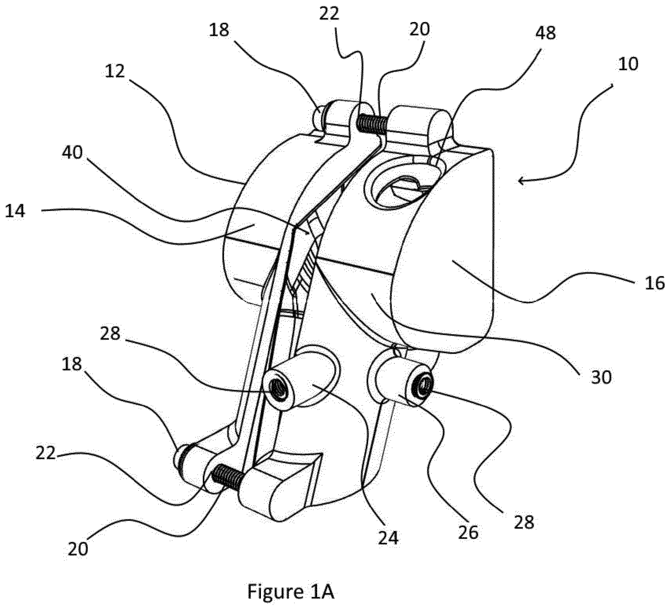

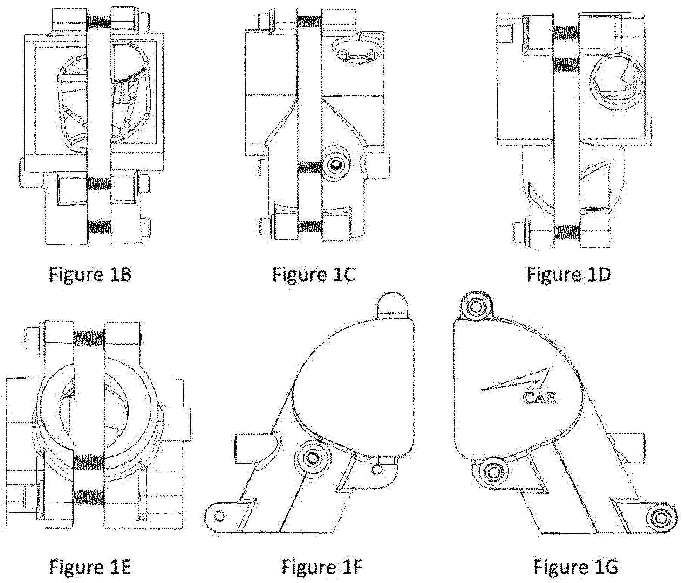

Referring now to Figure 1A, a first embodiment of an adaptor, generally referred to using the reference numeral 10, will be described. The adaptor 10 comprises a housing 12 illustratively comprised of two complementary plastic parts or halves 14, 16. The first complementary half 14 and the second complementary half 16 may be assembled together using a plurality of fasteners 18. In a particular embodiment each of the fasteners 18 comprises a bolt 20 inserted through a respective bolt receiving bore 22 in a first of the complementary halves 14, 16 and threaded into a respective one of a plurality of threaded inserts (not shown) in a second one of the two complementary halves 14, 16.

Still referring to Figure 1A, the housing 12 further comprises a first point of attachment 24 and a second point of attachment 26. Each point of attachment 24, 26 illustratively comprises a threaded receptacle 28.

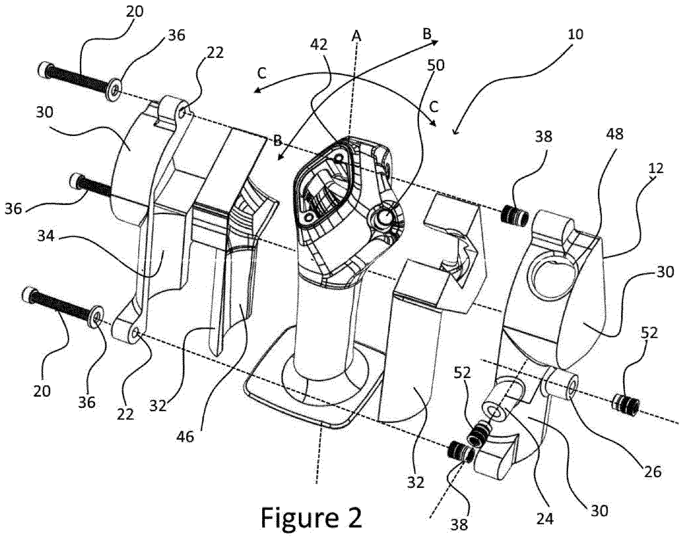

Referring now to Figure 2 in addition to Figure 1A, each of the complementary halves 14, 16 comprises an outer shell 30 manufactured from a rigid material such as hard plastic or the like, and a liner 32 manufactured from a flexible material such as a soft plastic or the like. The inner surface 34 of each of the outer shells 30 is formed to receive the liner 32 in a snug fit and such that the liner 32 is held snugly against the inner surface 34. In a particular embodiment an adhesive (not shown) may be used to secure the liner 32 to a corresponding one of the outer shells 30 or the liner 32 and a corresponding one of the outer shells 30 may be manufactured together as a unitary piece.

Still referring to Figure 2 in addition to Figure 1A, the liner 32 is formed such that when the complementary halves 14, 16 are assembled together by threading for each one of the fasteners 18 the bolt 20 into the bore 22 via a washer 36 and a threaded insert 38, a sidestick, or control interface, receiving space 40 is defined which is shaped to snugly receive a sidestick/control interface 42 such that the sidestick/control interface 42 is held securely within the sidestick receiving space 40 by the complementary halves 14, 16. In this regard, the liner 32 of each of the complementary halves 14, 16 includes features such as a molded surface 46 or the like which is complementary to the shape of the sidestick/control interface 42, and which ensures that each time the adaptor 10 is assembled about the sidestick/control interface 42, the positioning of the adaptor 10 on the sidestick/control interface 42 is consistently the same. Additionally, the complementary halves 14, 16 may further comprise apertures 48 or the like allowing control buttons 50 and the like on the sidestick/control interface 42 to be accessed.

Still referring to Figure 2, as known in the art the sidestick/control interface 42 is moveable from a central axis A in both a back-and-forth (B-B) direction which for example controls the pitch of an aircraft (not shown) and a side-to-side (C-C) direction which for example controls the roll of the aircraft. The first point of attachment 24 and second point of attachment 26 are positioned on the outer shell 30 of the housing 12 such that when the complementary halves 14, 16 are assembled about the sidestick/control interface 42, the first point of attachment 24 is aligned with the back-and-forth (B-B) direction, and the second point of attachment 26 is aligned with the side-to-side (S-S) direction, the second point of attachment 26 being at right angles to the orientation of the first point of attachment 24. Additionally, the first point of attachment 24 and the second point of attachment 26 lie in the same plane, which is substantially normal to the axis A of the sidestick/control interface 42. In a particular embodiment, an accelerometer (not shown) can for example be embedded in the outer shell 30 or the like. An exemplary embodiment of an accelerometer comprises a PhidgetSpatial 3/3/3 Precision accelerometer/magnetometer/gyroscope.

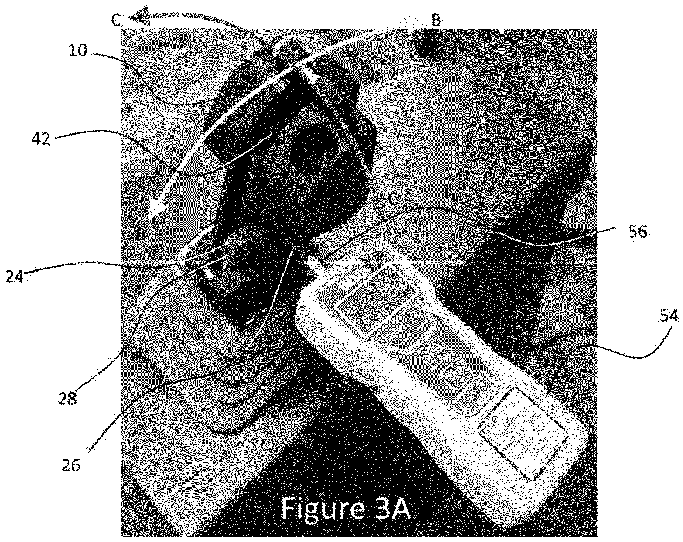

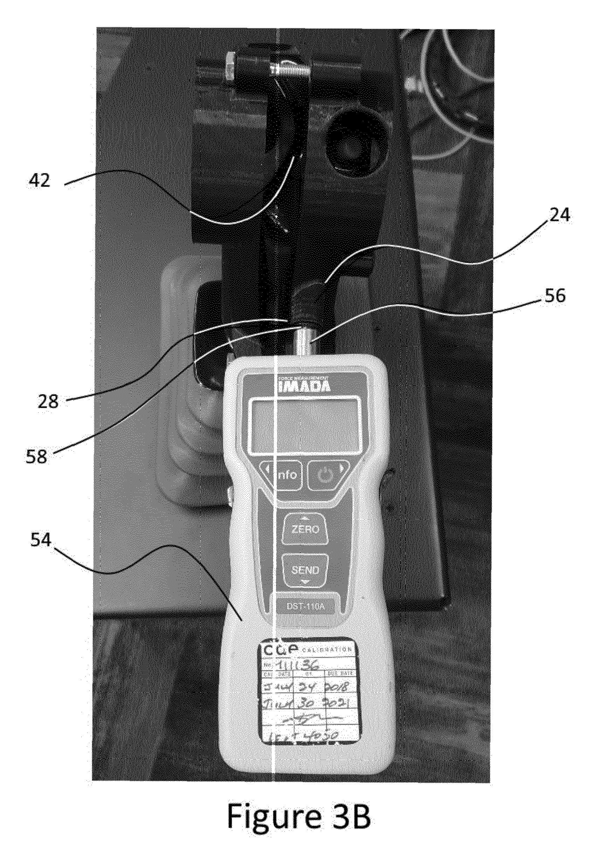

Referring now to Figure 3A and Figure 3B in addition to Figure 2, as discussed above each of the first point of attachment 24 and the second point of attachment 26 comprises the threaded receptacle 28 (which illustratively comprises a threaded insert 52). In order to measure the force feedback, the sidestick/control interface 42 in the back and forth (B-B) direction or the side-to-side (C-C) direction, once the bracket 10 has been assembled to the sidestick/control interface 42, a force gauge 54 comprising a plunger 56 may be attached to the bracket 10 by threading a threaded end 58 of the plunger 56 into the threaded receptacle 28 of a respective one of the first point of attachment 24 and the second point of attachment 26. As known in the art, the plunger 56 moves back and forth along a plunger axis. During measurement of the force feedback, the angle of the sidestick/control interface 42 may be measured, for example by reading an output of an accelerometer or by reading the angle from a simulator output.

Referring still to Figure 3A, the force feedback of the sidestick/control interface 42 in the side to side (C-C) direction, which is aligned with the plunger axis, can be measured by the force gauge 54 by threading the threaded end 58 of the plunger 56 into the threaded receptacle 28 of the second point of attachment 26 and pulling and pushing on the sidestick/control interface 42 in a side to side (C-C) direction using the force gauge 54 and such that pressure is exerted on the sidestick by movement of the force gauge 54. Movement of the sidestick/control interface 42 in a side-to-side direction is typically limited to a maximum deflection of about 20 degrees in either direction.

Referring back to Figure 3B, the force feedback of the sidestick/control interface 42 in the back and forth (B-B) direction can be measured by the force gauge 54 by threading the threaded end 58 of the plunger 56 into the threaded receptacle 28 of the first point of attachment 24 and pulling and pushing on the sidestick/control interface 42 in a back and forth (B-B) direction using the force gauge 54. Movement of the sidestick/control interface 42 in a back-and-forth direction is typically limited to a maximum deflection of about 18 degrees in either direction.

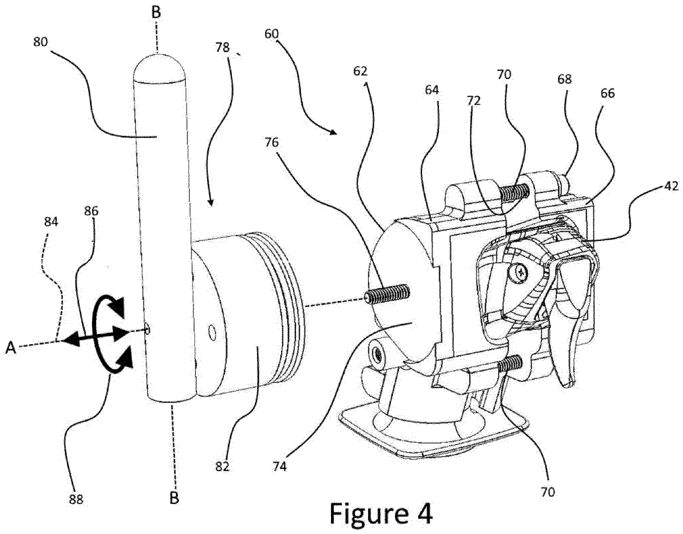

Referring now to Figure 4, a second embodiment of an adaptor 60 will be described. The adaptor 60 comprises a housing 62 illustratively comprised of two complementary plastic parts or halves 64, 66. The first complementary half 64 and the second complementary half 66 may be assembled together using a plurality of fasteners 68. In a particular embodiment the fasteners each comprises a bolt 70 each of which is inserted through a respective bolt receiving bore 72 in a first of the complementary halves 64 and threaded into a respective one of a plurality of threaded inserts (not shown) in a second one of the two complementary halves 64, 66. The two complementary halves 64, 66 are securable about the sidestick/control interface 42, which is held snugly therebetween for movement therewith.

Still referring to Figure 4, the housing 62 further comprises a first point of attachment 74 illustratively comprising a threaded rod 76. A force gauge 78 comprising a gauge handle 80 may be secured to the adaptor 60 via the rod 76. The force gauge 78 further comprises a sensor package 82 comprising one or more sensors (not shown) such as a load cell or the like which measure forces arising between the gauge handle 80 and the first point of attachment 74. An exemplary embodiment of a suitable load cell is a six (6) degree of freedom force-torque sensor which comprises strain gauges able to measure force along 3 orthogonal axes and produced by JR3 Multi-Axis Load Cell Systems. Illustratively, the sensor package 82 measures both axial forces and torque forces vis-à-vis axis A 84 of the point of attachment 74. The elongate gauge handle 80 is illustratively secured to the sensor package 82 such that the gauge handle axis B is at right angles to the axis A.

Still referring to Figure 4, in operation with the force gauge 78 secured to the housing 62 via the point of attachment 74 and the threaded rod 76, movement by a user of the gauge handle 80 in either a back and forth or side-to-side direction imparts measurable forces on the sidestick/control interface 42 in respectively the back and forth or side-to-side directions. The sensor package 82 reads these imparted forces as axial 86 or torque 88 forces, which can be collected and analysed in order to calibrate the sidestick/control interface 42.

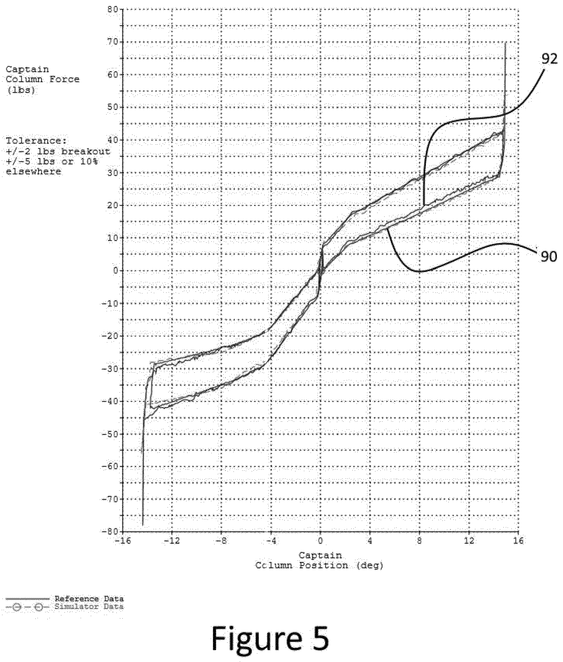

Referring now to Figure 5 in addition to Figure 4, output data 90 of a force measurement versus angle from upright of a sidestick/control interface 42 in a back and front (fore and aft) movement is shown. Additionally, reference data 92 may also be provided.

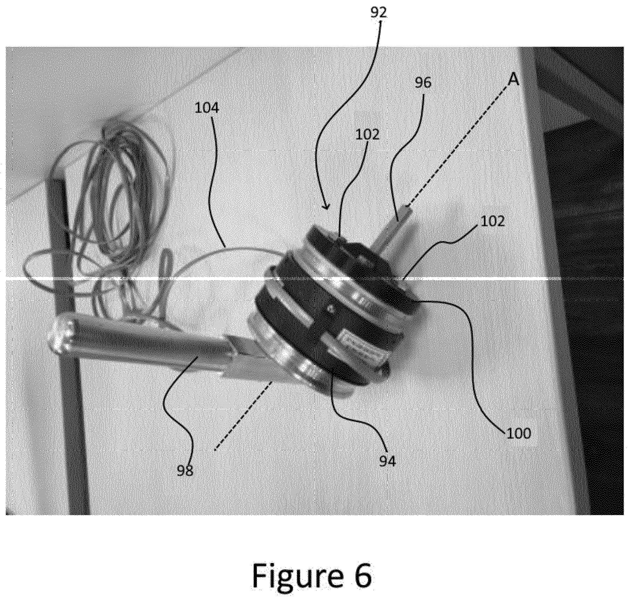

Referring now to Figure 6, an assembly 92 for measuring the feedback force of a stab trim is disclosed. The assembly 92 comprises a load cell 94 for measuring the torque between an elongate shaft 96 comprising a shaft axis A and a handle 98 arranged radially to the shaft axis A. The shaft 96 is mounted to the load cell 94 by a disk-shaped bracket 100 and a plurality of fasteners such as bolts 102 or the like. A conductive wire 104 can be provided to interconnect the electronics (not shown) of the load cell 94 with an external measuring device (also not shown), such as a multi-meter or the like, and via which measured torque values can be read.

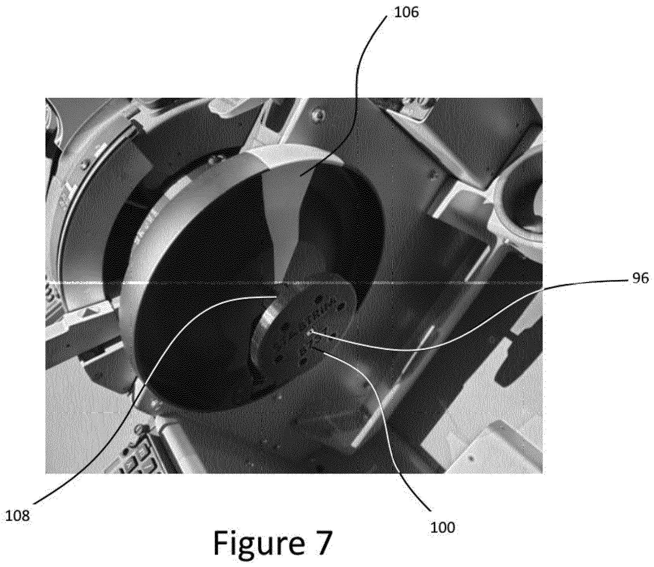

Referring now to Figure 7, the shaft 96 is interconnectable with a stab trim 106, which comprises a stab trim aperture 108 into which the shaft 96 can be inserted. In this regard, the aperture 108 and the shaft 96 are complementary in shape such that when inserted, the shaft 96 rotates with the stab trim 106. Illustratively, the shaft 96 is manufactured from a square rod and comprises a square cross-section.

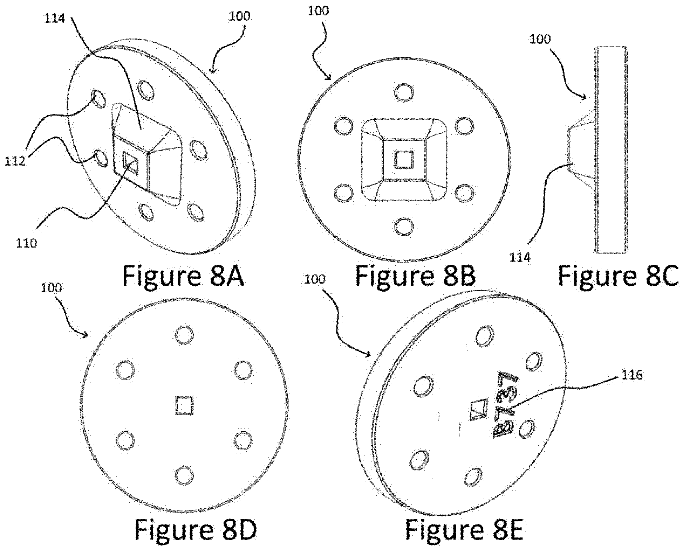

Referring to Figures 8A through 8F in addition to Figure 6, the bracket 100 is sized to accord with the load cell 94 and comprises a shaft receiving aperture 110 for receiving the shaft 96 as well as a plurality of bores 112 via which the bolts 102 can be inserted. The shaft receiving aperture 110 is illustratively sized and shaped to accept the square shaft 96 in a friction fit and for rotation therewith. An embossment 114 is provided around the shaft receiving aperture 110 to ensure that, when the assembly 92 is mounted to a stab trim 106, a minimum spacing is maintained to ensure that the assembly 92 is only in contact with the stab trim via shaft 96.

With reference to Figure 8F, in a particular embodiment a designation of the aircraft 116 for which the stab trim adaptor bracket 98 is intended can be provided.

Referring back to Figure 6 and Figure 7, in operation, the force feedback of the stab trim 106 can be measured by interconnecting the load cell 94 with a measuring device, inserting the shaft 96 of the assembly 92 into the stab trim aperture 108 and moving the handle 98 while collecting readings via the measurement device.

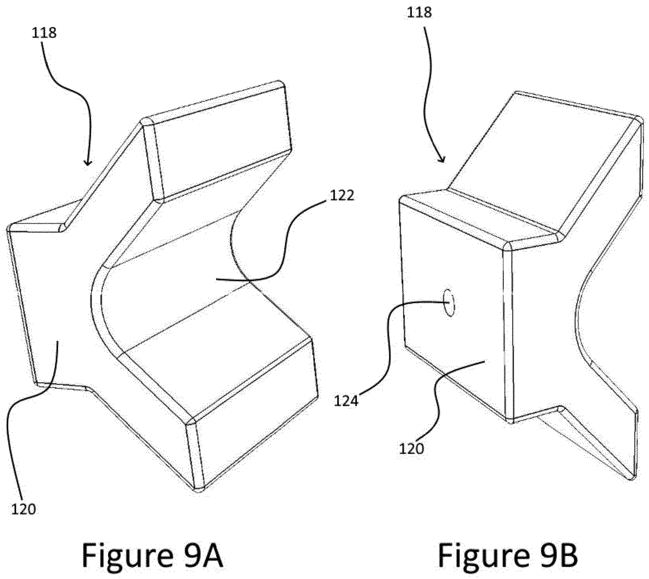

Referring now to Figure 9A and Figure 9B, an adaptor 118 in accordance with a third illustrative embodiment will now be described. The adaptor 118 comprises an adaptor body 120 comprising a foot pedal/control interface receiving recess 122. A point of attachment 124 is provided for attaching the plunger of a force gauge (both not shown). Illustratively the point of attachment 124 comprises an inner surface (not shown) threaded to receive a threaded end of the plunger.

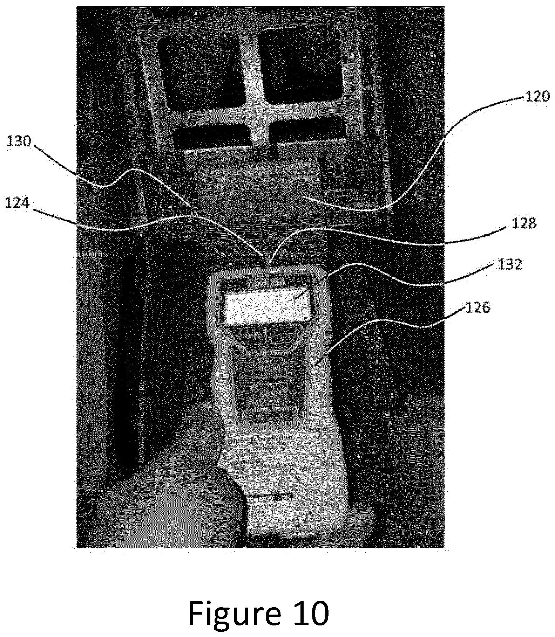

Referring now to Figure 10, a force gauge 126 comprising a plunger 128 is secured to the adaptor 118 by threading the end of the plunger 128 into the point of attachment 124. Once assembled, the foot pedal receiving recess 122 is placed over and pressed against a pedal/control interface 130 being tested (illustratively a rudder pedal in an aircraft simulator). The measured result is read off the display 132 of the force gauge 126.

Although the present invention has been described hereinabove by way of specific embodiments thereof, it can be modified, without departing from the nature of the subject invention as defined in the appended claims.

## Claims

1. An adaptor (10) for positioning a force gauge (54) relative to a control interface (42) in a flight simulator or aircraft, the force gauge comprising a gauge handle and a gauge connector, the control interface being moveable in at least one of a back-and-forth direction and a side-to-side direction, **characterized in that** the adaptor comprises:
a housing (12) positionable adjacent the control interface, the housing comprising:
a first surface (32) configured to snugly receive a predetermined surface of the control interface; and
a second surface (30) comprising a first housing connector (24, 26) configured for connection to the gauge connector (56) such that pressure is exertable on the control interface by the force gauge in a first direction of measurement aligned with one of the back-and-forth direction and the side-to-side direction.

2. The adaptor of Claim 1, wherein the control interface comprises a sidestick and wherein the housing is securable about a shaft of the sidestick.

3. The adaptor of Claim 1 or 2, wherein a second direction of measurement is at right angles to the first direction of measurement, and a first point of attachment (24, 26) being configured such that the first direction of measurement is aligned with the back-and-forth direction and the second direction of measurement is aligned with the side-to-side direction.

4. The adaptor of any of the Claims 1 to 3, wherein the gauge connector comprises an elongate plunger (56), the first direction of measurement is aligned with a plunger axis, the outer surface comprises a second point of attachment (24, 26), the first point of attachment is configured to receive an end of the plunger such that the plunger axis is aligned with the back-and-forth direction and the second point of attachment is configured to receive the end of the plunger such that the plunger axis is aligned with the side-to-side direction.

5. The adaptor of Claim 4, wherein the first point of attachment is at right angles to the second point of attachment.

6. The adaptor of Claim 4 or 5, wherein the first point of attachment and the second point of attachment lie in a common plane.

7. The adaptor of Claim 6, wherein the common plane is substantially normal to the sidestick.

8. The adaptor of any of the Claims 4 to 7, wherein the plunger comprises a male threaded end and wherein the first point of attachment and the second point of attachment each comprise a female threaded receptacle (28) for receiving the male threaded end (58).

9. The adaptor of any of the Claims 2 to 8, wherein the housing is comprised of two parts arrangeable on opposite sides of the sidestick and interconnectable by a plurality of fasteners (20, 38).

10. The adaptor of Claim 9, wherein each of the fasteners comprises a bolt (20) insertable through a respective bolt receiving bore in a first of the parts and a complementary threaded insert (38) in a second of the parts and wherein when the first part is arranged adjacent the second part, the bore aligns with the insert such that the bolt is threadable into the insert via the bore.

11. The adaptor of any of the Claims 2 to 10, further comprising an accelerometer for measuring a current angle of the sidestick.

12. A kit comprising the adaptor and the force gauge of any of the claims 1 to 11.

13. The kit of Claim 12, wherein the gauge handle is elongate and at right angles to the first direction of measurement.

14. A method for testing a force feedback of a control interface (42) in a flight simulator or aircraft, the control interface being moveable in at least one of a back-and-forth direction to change a pitch or a yaw of the simulator and in a side-to-side direction to change a roll of the simulator, **characterized in that** the method comprises:
placing an adaptor (10) according to any of the claims 1 to 11 and comprising a first point of attachment (24) adjacent the control interface;
connecting a force gauge (54) to the first point of attachment such that a first direction of measurement of the force gauge is aligned with one of the back-and-forth direction and the side-to-side direction; and
moving a gauge handle portion of the force gauge in the first direction of measurement, thereby causing the force gauge to measure the force feedback generated by the control interface in the first measurement direction.

15. The method of Claim14, wherein:
the control interface comprises a sidestick;
the force gauge comprises a second direction of measurement at right angles to the first direction of measurement; and
the connecting comprises connecting the force gauge to the second point of attachment such that the first direction of measurement is aligned with the back-and-forth direction and the second measurement direction is aligned with the side-to-side direction.

## Patentansprüche

1. Ein Adapter (10) zum Positionieren eines Kraftmessgeräts (54) relativ zu einer Steuerschnittstelle (42) in einem Flugsimulator oder Flugzeug, wobei das Kraftmessgerät einen Messgerätegriff und einen Messgeräteanschluss umfasst, wobei die Steuerschnittstelle in mindestens einer von einer Vor-und-zurück-Richtung und einer Seite-zu-Seite-Richtung beweglich ist, **dadurch gekennzeichnet, dass** der Adapter umfasst:
ein Gehäuse (12), das angrenzend an die Steuerschnittstelle positionierbar ist, wobei das Gehäuse umfasst:
eine erste Oberfläche (32), die so konfiguriert ist, dass sie eine vorbestimmte Oberfläche der Steuerschnittstelle passgenau aufnimmt; und
eine zweite Oberfläche (30), die einen ersten Gehäuseanschluss (24, 26) umfasst, der zur Verbindung mit dem Messgeräteanschluss (56) so konfiguriert ist, dass durch das Kraftmessgerät in einer ersten Messrichtung, die mit einer der Vor-und-zurück-Richtung und der Seite-zu-Seite-Richtung ausgerichtet ist, Druck auf die Steuerschnittstelle ausgeübt werden kann.

2. Der Adapter nach Anspruch 1, wobei die Steuerschnittstelle einen Sidestick umfasst und wobei das Gehäuse um einen Schaft des Sidesticks befestigbar ist.

3. Der Adapter nach Anspruch 1 oder 2, wobei eine zweite Messrichtung im rechten Winkel zur ersten Messrichtung steht und ein erster Befestigungspunkt (24, 26) so konfiguriert ist, dass die erste Messrichtung zur Vor-und-zurück-Richtung und die zweite Messrichtung zur Seite-zu-Seite-Richtung ausgerichtet ist.

4. Der Adapter nach einem der Ansprüche 1 bis 3, wobei der Messgeräteanschluss einen länglichen Stössel (56) umfasst, die erste Messrichtung mit einet Stösselachse ausgerichtet ist, die Aussenfläche einen zweiten Befestigungspunkt (24, 26) umfasst, der erste Befestigungspunkt so konfiguriert ist, dass er ein Ende des Stössels so aufnimmt, dass die Stösselachse auf die Vor-und-zurück-Richtung ausgerichtet ist, und der zweite Befestigungspunkt so konfiguriert ist, dass er das Ende des Stössels so aufnimmt, dass die Stösselachse auf die Seite-zu-Seite-Richtung ausgerichtet ist.

5. Der Adapter nach Anspruch 4, wobei der erste Befestigungspunkt im rechten Winkel zum zweiten Befestigungspunkt steht.

6. Der Adapter nach Anspruch 4 oder 5, wobei der erste Befestigungspunkt und der zweite Befestigungspunkt in einer gemeinsamen Ebene liegen.

7. Der Adapter nach Anspruch 6, wobei die gemeinsame Ebene im Wesentlichen senkrecht zum Sidestick ist.

8. Der Adapter nach einem der Ansprüche 4 bis 7, wobei der Stössel ein Aussengewindeende umfasst und wobei der erste Befestigungspunkt und der zweite Befestigungspunkt jeweils eine Innengewindeaufnahme (28) zur Aufnahme des Aussengewindeendes (58) umfassen.

9. Der Adapter nach einem der Ansprüche 2 bis 8, wobei das Gehäuse aus zwei Teilen besteht, die an gegenüberliegenden Seiten des Sidesticks anordenbar und durch eine Vielzahl von Befestigungselementen (20, 38) miteinander verbindbar sind.

10. Der Adapter nach Anspruch 9, wobei jedes der Befestigungselemente eine Schraube (20), die durch eine jeweilige Schraubenaufnahmebohrung in einem ersten der Teile einführbar ist, und einen komplementären Gewindeeinsatz (38) in einem zweiten der Teile umfasst, und wobei, wenn das erste Teil angrenzend an das zweite Teil angeordnet ist, die Bohrung mit dem Einsatz so fluchtet, dass die Schraube über die Bohrung in den Einsatz einschraubbar ist.

11. Der Adapter nach einem der Ansprüche 2 bis 10, ferner umfassend einen Beschleunigungsmesser zum Messen eines aktuellen Winkels des Sidesticks.

12. Ein Kit, umfassend den Adapter und das Kraftmessgerät nach einem der Ansprüche 1 bis 11.

13. Das Kit nach Anspruch 12, wobei der Messgerätegriff länglich ist und im rechten Winkel zur ersten Messrichtung steht.

14. Ein Verfahren zum Testen einer Kraftrückkopplung einer Steuerschnittstelle (42) in einem Flugsimulator oder Flugzeug, wobei die Steuerschnittstelle in mindestens einer Vor-und-zurück-Richtung zum Ändern eines Nickens oder eines Gierens des Simulators und einer Seite-zu-Seite-Richtung zum Ändern eines Rollens des Simulators beweglich ist, **dadurch gekennzeichnet, dass** das Verfahren umfasst:
Platzieren eines Adapters (10) nach einem der Ansprüche 1 bis 11 und umfassend einen ersten Befestigungspunkt (24) angrenzend an die Steuerschnittstelle;
Verbinden eines Kraftmessgeräts (54) mit dem ersten Befestigungspunkt, sodass eine erste Messrichtung des Kraftmessgeräts auf eine der Vor-und-zurück-Richtung und der Seite-zu-Seite-Richtung ausgerichtet ist; und
Bewegen eines Messgerätegriffabschnitts des Kraftmessgeräts in der ersten Messrichtung, wodurch bewirkt wird, dass das Kraftmessgerät die von der Steuerschnittstelle in der ersten Messrichtung erzeugte Kraftrückkopplung misst.

15. Das Verfahren nach Anspruch 14, wobei:
die Steuerschnittstelle einen Sidestick umfasst;
das Kraftmessgerät eine zweite Messrichtung im rechten Winkel zur ersten Messrichtung umfasst; und
das Verbinden das Verbinden des Kraftmessgeräts mit dem zweiten Befestigungspunkt umfasst, sodass die erste Messrichtung auf die Vor-und-zurück-Richtung und die zweite Messrichtung auf die Seite-zu-Seite-Richtung ausgerichtet ist.

## Revendications

1. Un adaptateur (10) pour positionner un dynamomètre (54) par rapport à une interface de commande (42) dans un simulateur de vol ou un aéronef, le dynamomètre comprenant une poignée de dynamomètre et un connecteur de dynamomètre, l'interface de commande étant mobile dans au moins une direction d'avant en arrière et une direction latérale, **caractérisé en ce que** l'adaptateur comprend :
un boîtier (12) pouvant être positionné de manière adjacente à l'interface de commande, le boîtier comprenant :
une première surface (32) configurée pour recevoir de manière ajustée une surface prédéterminée de l'interface de commande ; et
une seconde surface (30) comprenant un premier connecteur de boîtier (24, 26) configuré pour une connexion au connecteur de dynamomètre (56) de telle sorte qu'une pression puisse être exercée sur l'interface de commande par le dynamomètre dans une première direction de mesure alignée avec l'une de la direction d'avant en arrière et de la direction latérale.

2. L'adaptateur selon la revendication 1, dans lequel l'interface de commande comprend une manche de commande. et dans lequel le boîtier peut être fixé autour d'un manche de la manche de commande.

3. L'adaptateur selon selon la revendication 1 ou 2, dans lequel une seconde direction de mesure est à angle droit par rapport à la première direction de mesure, et un premier point de fixation (24, 26) étant configuré de telle sorte que la première direction de mesure soit alignée avec la direction d'avant en arrière et que la seconde direction de mesure soit alignée avec la direction latérale.

4. L'adaptateur selon l'une quelconque des revendications 1 à 3, dans lequel le connecteur de dynamomètre comprend un piston allongé (56), la première direction de mesure est alignée avec un axe de piston, la surface extérieure comprend un second point de fixation (24, 26), le premier point de fixation est configuré pour recevoir une extrémité du piston de telle sorte que l'axe du piston soit aligné avec la direction d'avant en arrière et le second point de fixation est configuré pour recevoir l'extrémité du piston de telle sorte que l'axe du piston soit aligné avec la direction latérale.

5. L'adaptateur selon la revendication 4, dans lequel le premier point de fixation est à angle droit par rapport au second point de fixation.

6. L'adaptateur selon la revendication 4 ou 5, dans lequel le premier point de fixation et le second point de fixation se trouvent dans un plan commun.

7. L'adaptateur selon la revendication 6, dans lequel le plan commun est sensiblement normal à la manche de commande.

8. L'adaptateur selon l'une quelconque des revendications 4 à 7, dans lequel le piston comprend une extrémité filetée mâle et dans lequel le premier point de fixation et le second point de fixation comprennent chacun un réceptacle taraudé femelle (28) pour recevoir l'extrémité filetée mâle (58).

9. L'adaptateur selon l'une quelconque des revendications 2 à 8, dans lequel le boîtier est composé de deux parties pouvant être agencées sur des côtés opposés de la manche de commande et interconnectables par une pluralité d'éléments de fixation (20, 38).

10. L'adaptateur selon la revendication 9, dans lequel chacun des éléments de fixation comprend un boulon (20) insérable à travers un alésage de réception de boulon respectif dans une première des parties et un insert fileté complémentaire (38) dans une seconde des parties et dans lequel, lorsque la première partie est agencée de manière adjacente à la seconde partie, l'alésage s'aligne avec l'insert de telle sorte que le boulon puisse être vissé dans l'insert via l'alésage.

11. L'adaptateur selon l'une quelconque des revendications 2 à 10, comprenant en outre un accéléromètre pour mesurer un angle actuel de la manche de commande.

12. Un kit comprenant l'adaptateur et le dynamomètre selon l'une quelconque des revendications 1 à 11.

13. Le kit selon la revendication 12,dans lequel la poignée du dynamomètre est allongée et à angle droit par rapport à la première direction de mesure.

14. Un procédé pour tester un retour de force d'une interface de commande (42) dans un simulateur de vol ou un aéronef, l'interface de commande étant mobile dans au moins une direction d'avant en arrière pour changer un tangage ou un lacet du simulateur et dans une direction latérale pour changer un roulis du simulateur, **caractérisé en ce que** le procédé comprend :
le placement d'un adaptateur (10) selon l'une quelconque des revendications 1 à 11 et comprenant un premier point de fixation (24) de manière adjacente à l'interface de commande
la connexion d'un dynamomètre (54) au premier point de fixation de telle sorte qu'une première direction de mesure du dynamomètre soit alignée avec l'une de la direction d'avant en arrière et de la direction latérale ; et
le déplacement d'une partie de poignée de dynamomètre du dynamomètre dans la première direction de mesure, amenant ainsi le dynamomètre à mesurer le retour de force généré par l'interface de commande dans la première direction de mesure.

15. Le procédé selon la revendication 14, dans lequel
l'interface de commande comprend une manche de commande;
le dynamomètre comprend une seconde direction de mesure à angle droit par rapport à la première direction de mesure ; et
la connexion comprend la connexion du dynamomètre au second point de fixation de telle sorte que la première direction de mesure soit alignée avec la direction d'avant en arrière et que la seconde direction de mesure soit alignée avec la direction latérale.
